Europäisches Patentamt

European Patent Office

Office européen des brevets

(19)

(11) Veröffentlichungsnummer: **0 020 958**
**A1**

(12) ## EUROPÄISCHE PATENTANMELDUNG

(21) Anmeldenummer: 80102462.1

(22) Anmeldetag: 06.05.80

(51) Int. Cl.³: **C 08 J 7/10,** C 08 L 23/16,
C 08 L 9/00, C 08 L 23/34
// C08J5/18, E04D5/00

(30) Priorität: 31.05.79 DE 2922089

(43) Veröffentlichungstag der Anmeldung: 07.01.81
Patentblatt 81/1

(84) Benannte Vertragsstaaten: **AT BE CH DE FR GB IT LI LU NL SE**

(71) Anmelder: **DYNAMIT NOBEL AKTIENGESELLSCHAFT, Patentabteilung Postfach 1209, D-5210 Troisdorf, Bez. Köln (DE)**

(72) Erfinder: **Simm, Manfred, Güldenbergstrasse 1, D-5210 Troisdorf/Bez. Köln (DE)**
Erfinder: **Spiess, Karl-Heinz, Wiesenstrasse 53, D-5204 Much-Schwellenbach (DE)**
Erfinder: **Weiss, Richard, Dr., Stresemannstrasse 16, D-5210 Troisdorf/Bez. Köln (DE)**

(54) **Formkörper aus Kunststoff bzw. Naturkautschuk und Verfahren zu seiner Herstellung.**

(57) Formkörper (1) aus Kunststoff bzw. Naturkautschuk, enthaltend eine in ihm in homogener Verteilung vorliegenden, durch energiereiche Strahlen vernetzbare Komponente, die nur in einem Teilbereich (1A) einschließlich eines Teils der Oberfläche (A) des Formkörpers (1) mindestens partiell vernetzt ist, und Verfahren zum Herstellen von Formkörpern (1), die nur über einen Teil ihrer Dicke ausgehend von einer Oberflächenseite (A) aus partiell vernetzt sind.

EP 0 020 958 A1

- 1 -

DYNAMIT NOBEL AKTIENGESELLSCHAFT
Troisdorf Bez. Köln

Formkörper aus Kunststoff bzw. Naturkautschuk und Verfahren zu seiner Herstellung.

Die Erfindung bezieht sich auf einen Formkörper aus Kunststoff bzw. Naturkautschuk gegebenenfalls mit Füllstoffen und Zusatzstoffen, enthaltend zumindest eine mittels energierecher Strahlen vernetzbare Komponente sowie ein Verfahren zum Herstellen des Formkörpers, ausgehend von einem beispielsweise durch Walzen, Kalandrieren, Spritzgießen, Extrudieren, Pressen, Extrusionsblasen, Beschichten od.dgl. geformten Körpers.

Es ist bekannt, daß sich zahlreiche Kunststoffe und auch Naturkautschuk durch Bestrahlen mit energiereichen Strahlen mehr oder weniger dicht vernetzen lassen. Unter energiereichen oder auch ionisierenden Strahlen versteht man Röntgen- und Gammastrahlen, Strahlen von Elektronen, Neutronen und Atomkernen sowie Strahlen von Elektronen und Ionen aus Teilchenbeschleunigern. Die im Kunststoff erzielten Veränderungen, die letztlich zur Vernetzung führen, hängen bei gegebenen äußeren Bedingungen nur von der Bestrahlungsdosis ab. Unter Bestrahlungsdosis versteht man die pro Gramm Material absorbierte Energiemenge; sie wird in Rad gemessen. Nähere Einzelheiten hierzu sind beispielsweise in dem Kunststoff-Handbuch Bd. IV, Polyolefine, Carl Hanser Verlauf München, 1969, Seiten 169 bis 179 zu entnehmen. Neben der sich in der Vernetzung zeigenden chemischen Wirkung treten auch physikalische Eigenschaftsänderungen in den bestrahlten Kunststoffen auf. Hierbei ist insbesondere die Verbesserung der Festigkeitseigenschaften bei erhöhter Temperatur von technischem Interesse, da durch die Vernetzung der Kunststoffe deren Funktionstüchigkeit erheblich gesteigert, und damit der Anwendungsbereich entsprechend erweitert werden können. Die auf der einen Seite mit der Vernetzung des Kunststoffes erreichten positiven Eigenschaften werden jedoch auch mit anderen nicht immer erwünschten Begleiterscheinungen erkauft, wozu insbesondere der Verlust der Schweißbarkeit einhergeht, d.h. vernetzte Kunststoffe lassen sich weder thermisch noch mit Quellschweißmitteln oder Lösungsmitteln mehr ausreichend verschweißen. In denjenigen technischen Anwendungsgebieten, in denen jedoch eine möglichst einfache Fügetechnik für Formkörper aus Kunststoffen erforderlich ist, sind daher dem Einsatz von vernetzten Kunststoffen Grenzen gesetzt. Wir verweisen in diesem Zusammenhang beispielsweise auf das Gebiet der Abdichtungsbahnen aus Kunststoffen für den Hoch- und Tiefbau, wie es beispielsweise in der DE-OS 26 28 741 umfassend dargelegt ist. An Abdichtungsbahnen werden hohe Anforderungen bezüglich Wasserdichtigkeit, Witterungsbeständigkeit und mechanischer Festigkeit gestellt, die im Grunde genommen durch einen einzigen Kunststoff nicht erfüllbar sind.

Bekannte thermoplastische Dichtungsbahnen auf der Basis von Weich-Polyvinylchlorid, Polyisobutylen, Acrylpolymeren oder mit Bitumen modifizierten Thermoplasten lassen sich zwar einfach und einwandfrei an den Nahtstellen dicht verschweißen, haben jedoch den Nachteil der Temperaturempfindlichkeit, des Weichwerdens und der Neigung zum kalten Fluß. Diesen Nachteil versucht man dann durch Auf- bzw. Einkaschieren von Verstärkungseinlagen aus z.B. Geweben oder Vliesen aus textilen Fasern oder Glasfasern entgegenzuwirken. Die auf der anderen Seite bekannten Dichtungsbahnen aus vulkanisierbaren Kunststoffen hingegen, z.B. auf Basis Chloroprenkautschuk, Äthylenpropylendienterpolymeren, chlorsulfoniertem Polyäthylenkautschuk oder Butylkautschuk genügen zwar den mechanischen Festigkeitsanforderungen und sind witterungsbeständig. Sie haben jedoch den Nachteil, daß die vulkanisierten Dichtungsbahnen sich nicht miteinander verschweißen lassen und nur schwer mittels Kleber oder Klebebänder dauerhaft dicht miteinander verbunden werden können, siehe z.B. die DE-OS 25 10 162 oder DE-AS 22 33 199.

Eine Zwischenstellung nehmen hier Dichtungsbahnen auf der Basis thermoplastischer Kunststoff mit elastomeren Eigenschaften ein. Bei der Dichtungsbahn z.B. nach der DE-OS 26 21 825 soll die Ausvulkanisation erst nach dem Verlegen auf dem Bau und nach dem Herstellen der Nahtverbindungen zwischen den Dichtungsbahnen erfolgen; es besteht jedoch die Gefahr einer vorzeitigen Ausvulkanisation, wodurch dann das einfache Herstellen geschweißter Nahtverbindungen wiederum unmöglich gemacht ist. Darüber hinaus kann bei späteren Reparaturarbeiten ebenfalls nicht mehr geschweißt werden.

Neuerdings ist man auch dazu übergegangen, anstelle der vorangehend beschriebenen aus einem Material homogen aufgebauten einschichtigen gegebenenfalls mit einer Verstärkungseinlage versehenen Kunststoffdichtungsbahn mehrschichtige Dichtungsbahnen aus vulkanisierbaren Materialien herzustellen, wobei nur eine innere Schicht einen Vulkanisationsbeschleuniger enthält und die Außenschicht vulkanisationsbeschleunigerfrei und damit noch thermisch und/oder durch Lösungsmittel bzw. Quellschweißmittel verschweißbar sind, siehe die DE-OS 26 28 741.

Nachteilig bei diesen mehrschichtigen Dichtungsbahnen ist einfach der erhöhte technische Aufbau, indem drei einzelne Folien hergestellt werden müssen, die in weiteren Verfahrensschritten miteinander kaschiert werden müssen, ohne daß auch hier eine zu frühzeitige Vulkanisation eintritt, um zu dem gewünschten Produkt zu kommen, das einerseits genügende mechanische Festigkeiten auch bei erhöhten Temperaturen aufweist und andererseits eine Fügetechnik durch Verschweißen zuläßt.

Jedoch auch für andere Formkörper außer Dichtungsbahnen kann es erwünscht und von Vorteil sein, daß neben den einerseits nur durch Vernetzung erreichbaren Eigenschaften eines Kunststoffes zugleich noch nur im unvernetzten Zustand des Kunststoffes vorhandene Eigenschaften vorhanden sind. In diese Richtung zielt die in der DE-AS 22 02 738 vorgeschlagene thermoplastische Mischung zum Herstellen von Formkörpern, bei der ein vulkanisierbares kautschukartiges Mischpolymerisat homogen in einer thermoplastischen Mischung verteilt ist und diese Mischung insgesamt nur partiell, d.h. nicht vollständig, ausvulkanisiert ist. Diese nicht vollständige Ausvulkanisierung wird durch einen entsprechend geringen Zusatz von Vulkanisationsmittel erreicht. Die so erhaltenen thermoplastischen Mischungen weisen noch begrenzt, thermoplastische neben elastomeren Eigenschaften auf. Die Schweißbarkeit ist jedoch auch bei diesen Mischungen nicht mehr gegeben.

Der Erfindung liegt die Aufgabe zugrunde, einen Formkörper aus Kunststoff zu schaffen, der einerseits die vorteilhaften Eigenschaften, die durch die Vernetzung eines Kunststoffes bewirkt werden, aufweist und zum anderen insbesondere die für eine einfache Fügetechnik erforderliche Schweißbarkeit der Thermoplaste ebenfalls noch besitzt. Dieses Ziel wird bei einem Formkörper der eingangs genannten Art erfindungsgemäß dadurch erreicht, daß die vernetzbare Komponente in homogener Verteilung in den Formkörper vorgesehen ist und nur in einem Teil des Formkörpers einschließend einen Teil der gesamten Oberfläche mindestens partiell mittels energiereicher Strahlen vernetzt ist.

Der erfindungsgemäße Formkörper hat den Vorteil, daß er von einem einzigen homogenen Materialansatz ausgeht und daher in einem einzigen Arbeitsgang gefertigt werden kann und dennoch in getrennten Bereichen einerseits die Eigenschaften des unvernetzten Kunststoffes und andererseits die durch Vernetzung erzielbaren Eigenschaften des Kunststoffes aufweist. Dieses ist ermöglicht durch den Einsatz einer durch energiereiche Strahlen vernetzbaren Komponente aus Kunststoff bzw. Naturkautschuk, so daß der Formkörper nach der Erfindung von Vernetzungsmitteln frei belassen werden kann. Bei dem vom Materialansatz her homogenen Formkörper nach der Erfindung kann zu einem beliebigen Zeitpunkt eine Vernetzung eines Teiles des Formkörpers vorgenommen werden, wobei dieser zu vernetzende Teilbereich ebenfalls in seiner Größe frei wählbar ist. Bevorzugt ist der Formkörper über einen Teil seiner Dicke ausgehend von einer Oberflächenseite mindestens partiell vernetzt. Bei Einsatz eines im unver-

0020958

netzten Zustand thermisch und/oder durch Lösungs- bzw. Quellmittel schweißbaren Kunststoffes ist dann der erfindungsgemäße Formkörper ebenfalls noch an der unvernetzt verbliebenen Oberfläche thermisch und/oder durch Lösungs- bzw. Quellmittel verschweißbar, im Gegensatz zu dem vernetzten Oberflächenbereich, der durch das Vernetzen seine Schweißbarkeit verloren hat.

Je nach eingesetzter durch energiereiche Strahlen vernetzbaren Komponente weist der erfindungsgemäße Formkörper die für viele Anwendungsgebiete erforderliche erhöhte Festigkeit, insbesondere auch bei erhöhter Temperatur bei gleichzeitig homogenem Aufbau auf.

Als vernetzbare Komponente werden erfindungsgemäß bevorzugt schweißbare und mittels energiereicher Strahlen vernetzbare Kunststoffe eingesetzt, wobei die Vernetzung bevorzugt mittels beschleunigter Elektronenstrahlen durchgeführt wird. Hierunter sind insbesondere Kunststoffe wie aus kautschukartigen Mischpolymerisaten aus Äthylen, wenigstens einem anderen Olefin der Formel $CH_2 = CHR$ bzw. $CH_2 = CH - R - CH = CH_2$ in der R einen Alkylrest mit 1 bis 12 Kohlenstoffatomen darstellt und gegebenenfalls einem Polyolen, wie z.B. Äthylen-Propylen-Dien-Terpolymer oder Äthylen-Propylen-Copolymer; Naturkautschuk, Styrol-Butadien-Kautschuk, Polybutadien-Kautschuk, Polyisopren-Kautschuk, Polyäthylen, Äthylen-Vinylacetat, Acrylnitril-Butadien-Styrol, Styrol-Butadien-Kautschuk-Block-Copolymer, Styrol-Isopren-Kautschuk-Block-Copolymer, Neopren-Kautschuk, Nitril-Kautschuk, Polysulfid-Kautschuk, chloriertes Polyäthylen, Polyurethan, Vinyliden-Copolymer, Silikon-Kautschuk, Vinyl-Silikon-Kautschuk, Polyacrylat, chlorsulfoniertes Polyäthylen, Fluorsilikon-Kautschuk, Polyvinylchlorid, Polypropylen, Butylkautschuk, Epichlorhydrin, Epichlorhydrin-Äthylenoxid, Polyacrylamid oder Polyamid zu verstehen.

Der Formkörper kann ausschließlich aus durch energiereiche Strahlen vernetzbaren Komponenten, aus Abmischungen dieser vernetzbaren Komponenten untereinander als auch als Abmischungen mit nicht vernetzbaren Kunststoffen hergestellt sein. Darüber hinaus können dem Formkörper Füllstoffe wie beispielsweise Ruße, silikatische Füllstoffe, Kreide und anderes mehr, Weichmacher, Stabilisatoren, Alterungsschutzmittel, Farbmittel, Gleitmittel und anderes mehr, zugesetzt sein. Auch die Anwendung von Treibmitteln ist möglich, so daß geschäumte Formkörper in der erfindungsgemäßen Ausbildung herstellbar sind. Der Formkörper selbst kann in bekannter Weise beispielsweise durch Extrudieren, Walzen, Kalandrieren, Spritzgießen, Pressen, Extrusionsblasen, Beschichten oder andere bekannte Verfahrenstechniken hergestellt werden, wie z.B. mittels Pasten durchgeführte Streichverfahren.

Eine bevorzugte Ausführungsform des erfindungsgemäßen Formkörpers sind Flächengebilde, wie Folien, Bahnen oder Platten, wobei die Ausbildung als gegen Wassereinwirkung und Witterungseinflüsse beständige Folie einen hervorragenden Platz einnimmt. Durch Anwendung der Erfindung ist es nämlich möglich, eine Folie für Abdichtungszwecke zu schaffen, die auf der einen Seite noch schweißbar ist und damit eine einfache und sichere Fügetechnik zuläßt und die im übrigen die Eigenschaften des vernetzten Kunststoffes, insbesondere Witterungsbeständigkeit und hohe Reißfestigkeit auch bei erhöhten Temperaturen aufweist. Die für die Abdichtung einzusetzenden Folien bestehen bevorzugt aus einem kautschukartigen Mischpolymerisat aus Äthylen, wenigstens einem anderen Olefin der Formel $CH_2 = CHR$ bzw. $CH_2 = CH - R - CH = CH_2$, in der R einen Alkylrest mit 1 bis 12 Kohlenstoffatomen darstellt und gegebenenfalls einem Polyolefin, insbesondere Äthylen-Propylen-Dien-Terpolymer und/oder Äthylen-Propylen-Copolymer.

0020958

Für den praktischen Einsatz der erfindungsgemäßen Formkörper kann es zweckmäßig sein, die vernetzte bzw. unvernetzt gebliebenen Oberflächenbereiche des Formkörpers kenntlich zu machen. Dieses kann beispielsweise dadurch geschehen, daß ein entsprechender Oberflächenbereich geprägt, bedruckt oder farblich gekennzeichnet wird. Die farbliche Kennzeichnung kann beispielsweise dadurch erfolgen, daß der Formkörper mit insbesondere organischen Farbmitteln eingefärbt ist, die durch die zur Vernetzung erforderliche Bestrahlung in der Farbe umschlagen, d.h. sich verändern, so daß vernetzte und unvernetzte Oberflächenbereiche sofort erkennbar sind.

Weitere Anwendungsgebiete der erfindungsgemäßen Formkörper sind beispielsweise Profile oder andere Gebilde wie Handläufe, Stoßfänger, Zierleisten usw., die beispielsweise mit weiteren Materialien zu einem Verbundkörper verbunden werden. Hierbei kann der vernetzte Bereich des Profiles die der Beanspruchung zugängliche Außenseite bilden, während der unvernetzte Oberflächenbereich mit einer Unterkonstruktion z.B. durch Schweißen oder Kaschieren verbunden wird.

Das Verfahren zum Herstellen eines Formkörpers nach der Erfindung geht aus von einem aus Kunststoff bzw. Naturkautschuk gegebenenfalls mit Füllstoffen und Zusatzstoffen, enthaltend zumindest eine mittels energiereicher Strahlen vernetzbare Komponente geformten Formkörper, der beispielsweise durch Walzen, Kalandrieren, Spritzgießen, Extrudieren, Pressen, Extrusionsblasen, Beschichten od.dgl. hergestellt wird. Erfindungsgemäß wird der Formkörper mittels energiereicher Strahlen ausgehend von einem Teil seiner gesamten Oberfläche und nur über einen Teil seines Querschnittes mindestens partiell vernetzt.

0020958

Das erfindungsgemäße Verfahren hat den Vorteil, daß bei einem in einem einzigen Herstellungsvorgang gefertigten aus einem materialmäßig homogenen Ansatz bestehenden Formkörper eine Partie vernetzt werden kann, während der restliche Formkörper unvernetzt belassen werden kann. Bevorzugt wird das erfindungsgemäße Verfahren so durchgeführt, daß der Formkörper auf einer Oberflächenseite einer energiereichen Strahlung in solchem Umfange ausgesetzt ist, daß die vernetzbaren Komponenten im Bereich bis zu einer gewünschten Eindringtiefe der Strahlen in den Formkörper, die jedoch geringer als die Dicke des Formkörpers gewählt ist, zumindest partiell vernetzen. Es ist bekannt, daß die Eindringtiefe der verschiedenen Strahlenarten von ihrer Energie abhängt. Bevorzugt wird das erfindungsgemäße Verfahren mittels beschleunigter Elektronenstrahlen durchgeführt. Für das Ausmaß der Vernetzung ist bei gegebenen äußeren Bedingungen nur die Bestrahlungsdosis, d.h. die pro Gramm Kunststoff absorbierte Energiemenge maßgebend. Diese Bestrahlungsdosis kann z.B. durch Verändern der Beschleunigungsspannung für die energiereichen Strahlen oder durch Verändern des Abstandes zwischen Strahlungsquelle und Oberfläche des Formkörpers oder mittels eines Vorabsorbers, z.B. einer dünnen Metallfolie oder durch Verändern des Einfallwinkels der Strahlen auf die Oberfläche des Formkörpers eingestellt werden. Der Vorabsorber wird zwischen Strahlenquelle und zu bestrahlender Oberfläche angeordnet, z.B. Aluminiumfolie oder Kupferfolie. Je nach der Bestrahlungsdosis tritt eine mehr oder weniger starke Vernetzung des Kunststoffes im Bereich der Eindringtiefe der Strahlen ein. Der Vernetzungsgrad kann beispielsweise mit dem Dekalinlöslichkeitstest für die unvernetzt gebliebenen Anteile bestimmt werden und ist somit bei vorgegebenen Bedingungen reproduzierbar und variierbar.

In dem Formkörper werden bei Bestrahlung nur diejenigen Komponenten vernetzt, die vernetzbar sind, z.B. Füllstoffe wie Silikate, Ruß usw. nicht.

Die vernetzbare Komponente bzw. Komponenten können je nach Bestrahlungsdosis bis zu 100 % vernetzt werden, d.h. von partiell bis vollständig vernetzt. Die Füllstoffe haben beispielsweise auch insoweit einen Einfluß auf die Vernetzung, als sie das Eindringen der Strahlen erschweren, da je höher die Dichte des Materials des Formkörpers, desto stärker die Abbremsung der energiereichen Strahlen ist.

Die Erfindung wird in der Zeichnung und an nachfolgenden Beispielen näher erläutert.
Es zeigen

Fig. 1       einen Querschnitt durch einen plattenförmigen homogenen unvernetzten Formkörper,

Fig. 2       die Bestrahlung des Formkörpers nach Fig. 1,

Fig. 3       den Querschnitt des bestrahlten Formkörpers nach Fig. 2,

Fig. 4       den Querschnitt eines Formkörpers mit halbrundem Profilquerschnitt,

Fig. 5 und 6       im Querschnitt verschiedene Nahtverbindungen

Fig. 7       eine schematische grafische Darstellung der Vernetzungsgrade des Formkörpers bei unterschiedlicher Strahlendosis,

Fig. 8 und 9       schematische Darstellungen des Bestrahlungsverfahren in zwei Varianten.

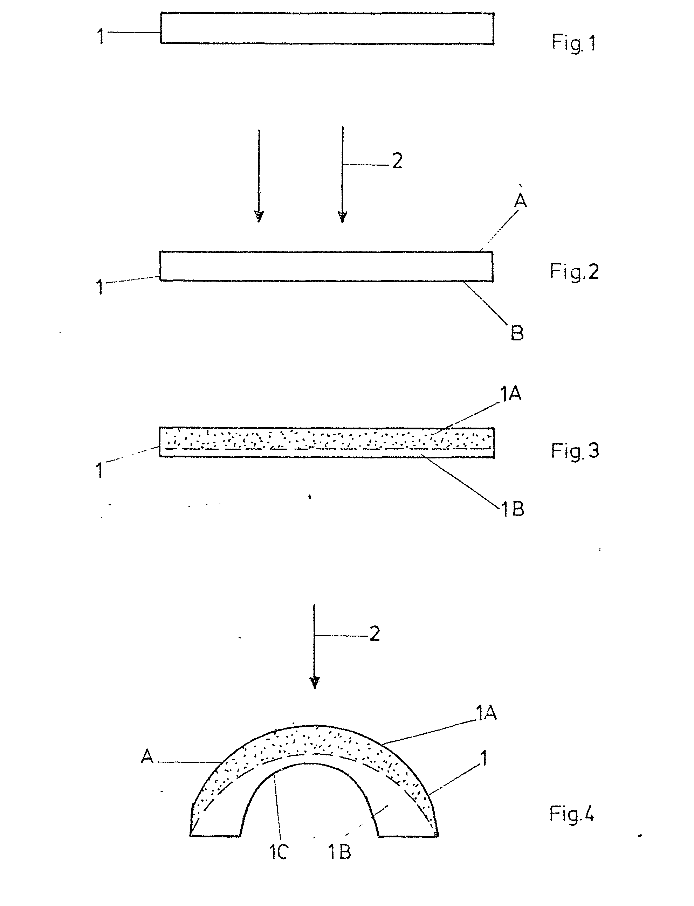

In der Fig. 1 ist schematisch der Querschnitt eines plattenförmigen noch nicht vernetzten homogenen Formkörpers 1 aus einer Kunststoff-Formmasse dargestellt, wobei in der Kunststoff-Formmasse mindestens eine mittels energiereicher Strahlen, vernetzbare Komponente, die bevorzugt mittels beschleunigter Elektronen vernetzt wird, wie sie beispielsweise im Patentanspruch 4 aufgeführt sind, enthalten ist.

0020958

Je nach der Funktion des Formkörpers, hier der Platte, und dem gewünschten Vernetzungsgrad kann,die vernetzungsfähige Komponente vorzugsweise zwischen 5 bis 100 Gew.-% des Formkörpers 1 betragen. Aus der Darstellung nach Fig. 2 ist zu ersehen, wie auf den plattenförmigen Formkörper 1 nur auf einen Teil seiner Oberfläche, nämlich die Oberflächenseite A die energiereichen Strahlen 2 einwirken. Die Oberflächenseite B wird nicht bestrahlt. In der Fig. 3 ist dann der Querschnitt des erfindungsgemäß ausgebildeten Formkörpers 1 dargestellt, der nur über einen Teil seines Querschnittes und einen Teil seiner Oberfläche, nämlich in dem gekennzeichneten Bereich 1 A vernetzt worden ist, während der Teilbereich 1 B mit der Oberfläche B unvernetzt verbleibt. Der in dem Bereich 1 A erzielte Vernetzungsgrad hängt, wie bereits vorangehend erläutert, einerseits von der Bestrahlungsdosis ab, zum anderen jedoch auch von den Gewichtsanteilen der vernetzbaren Komponenten. Besteht beispielsweise der Formkörper 1 zu 100 Gew.-% aus einem vernetzbaren Kunststoff, wie beispielsweise EPDM, so ist es möglich, in dem Bereich 1 A auch eine vollständige Vernetzung zu erreichen.

In der Fig. 4 ist abweichend von den plattenförmigen Formkörpern nach den Figuren 1 bis 3 ein im Querschnitt profilierter Formkörper 1 dargestellt, der erfindungsgemäß ausgebildet werden kann. Die Erfindung kann nicht nur auf ebene flächige Gebilde angewendet werden, sondern beispielsweise auch auf Formkörper mit gekrümmten Oberflächen. Wenn die energiereichen Strahlen 2, wie in Fig. 4 dargestellt, nur aus einer Richtung auf den Formkörper 1 einwirken, so wird in Abhängigkeit von dem unterschiedlichen Einfallwinkel, d.h. Auftreffwinkel der Strahlen 2 auf die Oberfläche A des Formkörpers 1 eine unterschiedliche Eindringtiefe der Strahlen und damit eine entsprechende Vernetzung erreicht. Je größer

- 12 -

der Abstand von Strahlenquelle zur Oberfläche A ist, desto geringer wird auch die Eindringtiefe der Strahlen aus z.B. beschleunigten Elektronen.

Die gestrichelte Linie 1 C stellt hierbei die gedachte Trennungslinie zwischen dem vernetzten Bereich 1 A und dem unvernetzt gebliebenen Bereich 1 B des Formkörpers 1 dar.

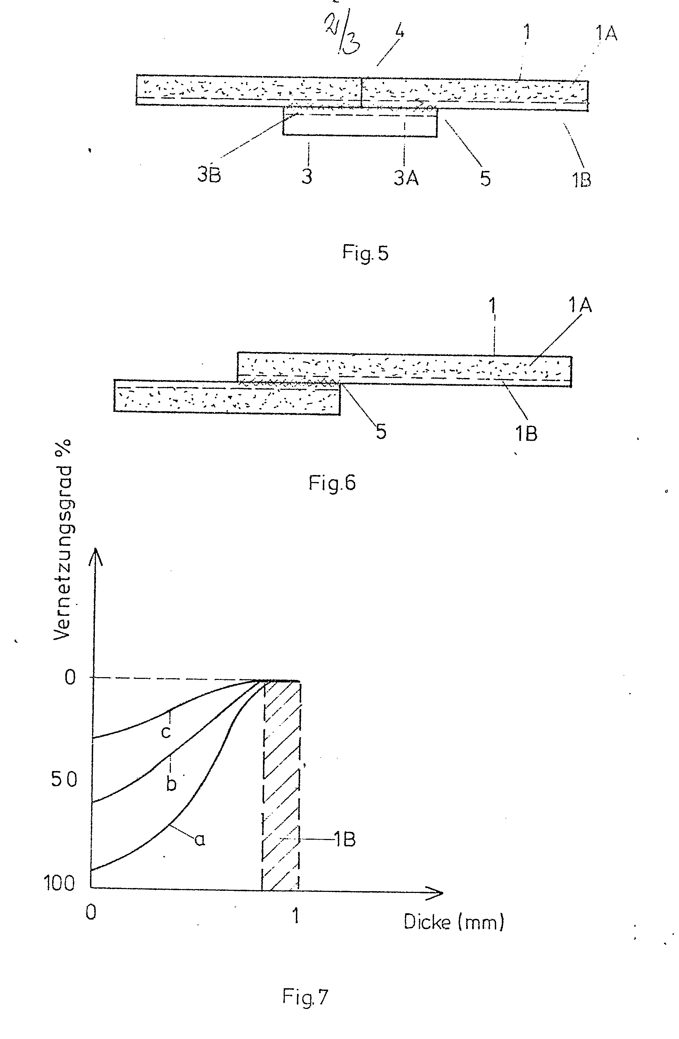

Werden nun für die Formkörper im unvernetzten Zustand schweißfähige, d.h. thermisch verschweißbare bzw. mit Lösungsmittel oder Quellmittel verschweißbare Komponenten eingesetzt, so bieten auch die erfindungsgemäß nur in Teilbereichen vernetzten Formkörper die Möglichkeit, Fügetechniken unter Zuhilfenahme von Schweißverbindungen anzuwenden, wie an zwei Ausführungsbeispielen in Fig. 5 und 6 dargestellt. Die Formkörper 1 sind beispielsweise Kunststoffolien, die wie in der Fig. 5 im Querschnitt dargestellt, unter Bildung der Stoßnaht 4 miteinander verbunden werden sollen. Die Folien werden hierbei so nebeneinander angeordnet, daß auf der einen Seite jeweils der unvernetzte Bereich 1 B der Folien mit den unvernetzten Oberflächen und auf der gegenüberliegenden Seite die vernetzten Bereiche 1 A angeordnet sind. Die Nahtverbindung wird dann mit Hilfe des Fugenbandes 3 hergestellt, das entweder vollständig aus unvernetztem schweißbarem Kunststoff besteht oder aber in gleicher Weise aufgebaut ist wie die Folie 1. Hierbei wird dann das Fugenband 3 mit seiner nicht vernetzten Seite 3 B auf die unvernetzten Oberflächen B der Folien 1 aufgelegt und beispielsweise mittels Quellschweißmittel 5 verschweißt. Die Verwendung eines Fugenbandes 3 mit dem gleichen Aufbau wie die Folien 1 hat den Vorteil, daß auch der vernetzte Bereich 3 A des Fugenbandes zur Verstärkung der Nahtverbindung insgesamt beiträgt.

In der Fig. 6 ist im Querschnitt eine Überlappungsverbindung mit Schweißnaht 5 von erfindungsgemäß ausgebildeten folienartigen Formkörpern 1 dargestellt. Auch hier werden im Überlappungsbereich die unvernetzten Oberflächenbereiche der Folien 1 zusammengefügt. Die Folien 1 nach Fig. 5 und 6 können beispielsweise aus EPDM durch Kalandrieren, Walzen oder Extrudieren hergestellt werden und sind als Dichtungsbahnen beispielsweise für die Eindeckung von Flachdächern verwendbar. Die in den Fig. 5 und 6 dargestellten Nahtverbindungen sind nur beispielhaft. Es sei zusätzlich darauf hingewiesen, daß die erfindungsgemäß ausgestalteten Formkörper 1 mit ihrer nicht vernetzten Seite auch mit anderen Materialien beispielsweise Metallfolien, Metallblechen, Glasvliesen, textilen Geweben usw. verbunden werden können.

In der Fig. 7 ist schematisch die Abhängigkeit des erreichbaren Vernetzungsgrades von der Strahlendosis dargestellt. Hierbei ist ein Formkörper, plattenförmig, mit einer Dicke von 1 mm zugrundegelegt, dessen Restdicke in dem schraffierten Bereich 1 B unvernetzt verbleibt. Je nach der Größe der Strahlendosis a, b, c wird eine höhere oder niedrigere Vernetzung erreicht, die zudem noch mit der Eindringtiefe abnimmt. Betrachtet man nur den vernetzbaren Komponentenanteil eines Formkörpers, so kann diese vernetzbare Komponente je nach Strahlendosis partiell in weiten Bereichen und bis zu 100 % vernetzt werden.

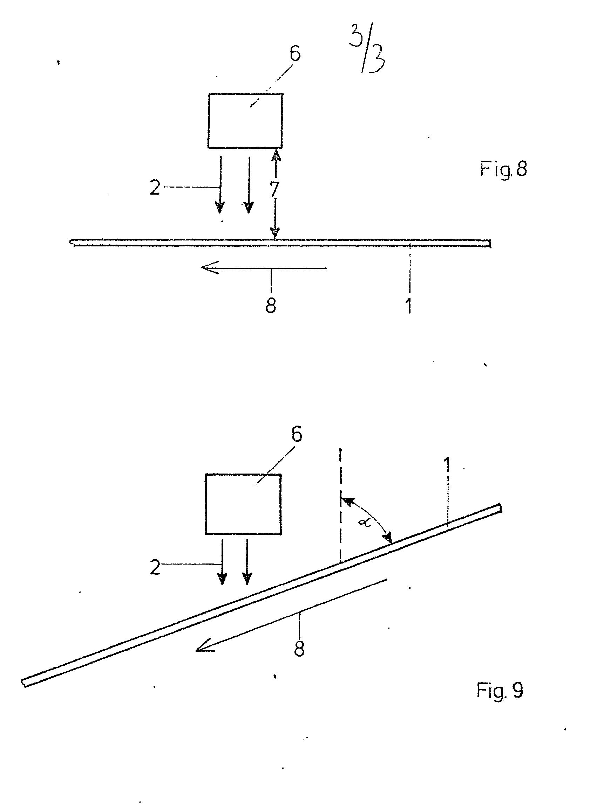

Die Herstellung des erfindungsgemäß ausgebildeten Formkörpers ist relativ einfach schematisch in den Figuren 8 und 9 dargestellt. Der Formkörper 1, beispielsweise eine Folie oder Platte wird nach bekannten Verfahren hergestellt und danach zur Bestrahlung mittels energiereicher Strahlen an der Strahlungsquelle 6 mit dem Abstand 7 in Pfeilrichtung 8 vorbeigeführt. Die energiereichen Strahlen 2, bevorzugt aus beschleunigten Elektronen, wir-

0020958

ken mit einer von den vorgegebenen Bedingungen, wie Beschleunigungsspannung der Strahlenquelle 6, Abstand 7 zwischen Strahlenquelle und Formkörper 1, auf denselben ein und dringen mehr oder weniger tief von einer Seite in den Formkörper 1 ein und bewirken eine entsprechende Vernetzung der vernetzungsfähigen Komponente. Durch Vergrößerung beispielsweise des Abstandes 7 zwischen Formkörper 1 und Strahlenquelle 6 wird die Eindringtiefe der Strahlen 2 in den Formkörper 1 verringert, da der Luftraum 7 bereits als Vorabsorber wirkt und eine Abbremsung der Elektronen zur Folge hat.

Die in dem Formkörper 1 absorbierte Strahlungsenergie kann jedoch auch durch Veränderung des Auftreffwinkels $\alpha$ der Strahlen 2 auf die Formkörperoberfläche variiert werden, wie in der Fig. 9 schematisch dargestellt ist.

Das Herstellen von erfindungsgemäß ausgebildeten Formkörpern wird an den nachfolgenden Beispielen noch weiter erläutert:

0020958

Beispiel 1

Herstellen einer nur über einen Teil ihrer Dicke von einer Oberflächenseite aus vernetzter Folie.

In einem Stempelkneter werden bei 170°C die nachfolgend aufgeführten Rezepturbestandteile gemischt:

| | | |
|---|---|---|
| 100 Gew.-Teile | EPDM/Keltan[R] 712 von DSM, NL |
| 1 " " | Stearinsäure |
| 60 " " | Ruß FEF |
| 40 " " | Kieselsäureanhydrit und Kaolinit/ Sillitin[R] |
| 60 " " | Paraffinisches Mineralöl/ (Sunpar[R] 150 von Sunoil Comp.) |
| 5 " " | Zinkoxid |

Zur besseren Homogenisierung wird die so erhaltene Mischung weitere 10 min. bei 180° auf ein Walzwerk gegeben und danach über einen Strainer einem Kalander zugeführt. Die dort bei 180° mit einer Geschwindigkeit von 5 m/min. gefertigte 1,2 mm dicke Folie wird in einer Elektronenstrahlanlage unter den folgenden Bedingungen in Teilbereichen vernetzt:

| | |
|---|---|
| Beschleunigungsspannung | 500 KeV |
| Strahlstromstärke | 60 mA |
| Transportgeschwindigkeit der Folie | 3,5 m/min. |
| Oberflächendosis | 16 Mrad |
| Abstand Scannerfenster - Folienoberfläche | 17 cm |

Die bestrahlte Folie ist bis zu einer Dicke von 1,1 mm von einer Seite her vernetzt, eine Restdicke von 100 $\mu$ ist unvernetzt geblieben. Die so erhaltene Folie ist auf ihrer unvernetzten Seite mit Tetrachloräthylen quellschweißbar und hat bei 80°C eine Reißfestigkeit von 3,5 N/mm². Hingegen weist die vollständig unvernetzte Folie bei 80°C nur eine Reißfestigkeit von 0,1 N/mm² auf. Sie eignet sich hervorragend als Dichtungsbahn.

Beispiel 2

Unter den gleichen Verfahrensbedingungen wie unter 1 wird aus der folgenden ungefüllten Rezeptur eine 1,0 mm dicke Folie gefertigt:

| 100 Gew.-Teile | EPDM/BUNA (R) AP 451 der Chem. Werke Hüls |
| 5 " " | Zinkoxid |
| 1 " " | Stearinsäure |
| 140 " " | Parafinisches Mineralöl/ Gulf Oil 2212 |
| 4 " " | Polywachs 6000 |

Mit den folgenden Bestrahlungsbedingungen in einer Elektronenstrahlanlage wird eine Vernetzung nur in einem Teilbereich der Folie erreicht:

| Beschleunigungsspannung | 400 KeV |
| Strahlstromstärke | 60 mA |
| Transportgeschwindigkeit der Folie | 5 m/min. |
| Oberflächendosis | 16 Mrad |

Abstand Scannerfenster-Folienoberfläche 12 cm

Die bestrahlte Folie ist von der bestrahlten Seite her bis zu einer Eindringtiefe von 850 $\mu$ vernetzt, eine Restdicke von 150 $\mu$ ist unvernetzt verblieben.

Beispiel 3

Die nachfolgenden Rezepturbestandteile werden im Fluid-Mischer bei 120°C über 20 min. gemischt, über eine zweiwellige Aufbereitungsmaschine und einen Strainer auf einen Kalander gebracht und bei 200°C mit 3 m/min. zu einer 1,5 mm dicken Folie verarbeitet:

| 100 | Gew.-Teile | Buna (R) AP 447 |
| 5 | " " | Zinkoxyd |
| 2 | " " | Stearinsäure |
| 40 | " " | Sunpar 150 |
| 40 | " " | ataktisches Polybuten |
| 70 | " " | Corax A (Degussa) |
| 220 | " " | Sillitin Z |
| 5 | " " | Dispergator DS |

Um nur einen Teilbereich, d.h. nur über einen Teil der Dicke die Folie zu vernetzen, sind bei der Elektronenstrahlanlage eingehalten:

| Beschleunigungsspannung | 750 KeV |
| Strahlstromstärke | 60 mA |
| Transportgeschwindigkeit der Folie | 4 m/min. |
| Oberflächendosis | 12 Mrad |

Abstand Scannerfenster-Folienoberfläche 17 cm

Vorabsorber zwischen Scannerfenster und Folienoberfläche 0,3 mm Aluminiumfolie

Beispiel 4

Die nachfolgende Rezeptur wird wie in Beispiel 1 zu einer 1 mm dicken Folie verarbeitet:

| 50 GewTeile | Chlorsulfoniertes Polyäthylen Hypalon $^{(R)}$ 40 von DuPont |
| 50 " " | Chlorsulfoniertes Polyäthylen Hypalon $^{(R)}$ 20 von DuPont |
| 4 " " | Magnesiumoxid |
| 10 " " | $TiO_2$ |
| 150 " " | Calciumcarbonat |
| 60 " " | Chlorparaffin 70 % |

Um durch die vernetzte Schicht die nötige Festigkeit zu bekommen, ist eine Oberflächendosis von 10 Mrad erforderlich. Diese Dosis wird mit den folgenden Bedingungen erhalten. Diese Folie wird in einer Elektronenstrahlanlage unter folgenden Bedingungen bestrahlt und in Teilbereichen vernetzt:

| Beschleunigungsspannung | 400 KeV |
| Strahlstromstärke | 25 mA |
| Transportgeschwindigkeit der Folie | 3,5 m/min. |
| Oberflächendosis | 10 Mrad |

Abstand Scannerfenster-Folienoberfläche 17 cm

Die so erhaltene bestrahlte Folie ist über eine Dicke von 850 $\mu$ vernetzt, während eine Restdicke von 150 $\mu$ unvernetzt verbleibt. Die Folie hat nunmehr bei 80 $^{\circ}$C noch eine Reißfestigkeit von 2,8 N/mm$^2$ gegenüber der vollständig unvernetzten Folie, die bei 80 $^{\circ}$C nur eine Reißfestigkeit von 0,3 N/mm$^2$ aufweist. Die nicht ver-

netzte Oberfläche der Folie ist noch schweißbar, so daß die einfache Fügetechnik und Verbindungen mittels Schweißen herstellbar sind.

Beispiel 5

Unter den gleichen Verfahrensbedingungen wie unter Beispiel 1 wird aus der folgenden Rezeptur eine 3 mm dicke transparente Folie gefertigt.

| 100 Gew.-Teile | Buna [R] AP 447 |
| 4 " | Polywachs 6000 |
| 250 " | Sunpar 2280 |

Um eine partielle Vernetzung in der Dicke und damit die Verschweißbarkeit durch eine unvernetzte Seite zu gewährleisten, sind bei der Bestrahlung mit beschleunigten Elektronen folgende Bedingungen eingehalten:

| Beschleunigungsspannung | 900 KeV |
| Strahlstromstärke | 100 mA |
| Transportgeschwindigkeit | 4 m/min. |
| Abstand Scannerfenster-Substrat | 17 cm |

OZ 79028 MG/Hs.
28. Mai 1979

0020958

Patentansprüche:

1. Formkörper aus Kunststoff bzw. Naturkautschuk gegebenenfalls mit Füllstoffen und Zusatzstoffen, enthaltend zumindest eine durch energiereiche Strahlen vernetzbare Komponente, d a d u r c h g e - k e n n z e i c h n e t , daß die vernetzbare Komponente in homogener Verteilung in dem Formkörper vorgesehen ist und nur in einem Teil des Formkörpers einschließend einen Teil der gesamten Oberfläche mindestens partiell mittels energiereicher Strahlen vernetzt ist.

2. Formkörper nach Anspruch 1, dadurch gekennzeichnet, daß er über einen Teil seiner Dicke ausgehend von einer Oberflächenseite mindestens partiell vernetzt ist.

3. Formkörper nach Anspruch 1 oder 2, dadurch gekennzeichnet, daß der unvernetzt verbliebene Oberflächenteil thermisch und/oder durch Lösungs- bzw. Quellmittel schweißbar ist.

4. Formkörper nach einem der Ansprüche 1 bis 3, dadurch gekennzeichnet, daß die vernetzbare Komponente aus einem schweißbaren und mittels beschleunigter Elektronenstrahlen vernetzbarem Material, insbesondere aus kautschukartigen Mischpolymerisaten aus Äthylen, wenigstens einem anderen Olefin der Formel $CH_2 = CHR$ bzw. $CH_2 = CH - R - CH = CH_2$, in der R einen Alkylrest mit 1 bis 12 Kohlenstoffatomen darstellt und gegebenenfalls einem Polyolen, wie z.B. Äthylen-Propylen-Dien-Terpolymer oder Äthylen-Propylen-Copolymer; Naturkautschuk, Styrol-Butadien-Kautschuk, Polybutadien-Kautschuk, Polyisopren-Kautschuk, Polyäthylen, Äthylen-Vinylacetat, Acrylnitril-Butadien-Styrol, Styrol-Butadien-Kautschuk-Block-Copolymer, Styrol-Isopren-Kautschuk-Block-Copolymer, Neopren-Kautschuk, Nitril-Kautschuk, Polysulfid-Kautschuk, chloriertes Polyäthylen, Polyurethan, Vinyli-den-Copolymer, Silicon-Kautschuk, Vinyl-Silicon-Kautschuk, Polyacrylat, chlorsulfoniertes Polyäthylen, Fluorsilicon-Kautschuk, Polyvinylchlorid, Polypropylen, Butylkautschuk, Epichlorhydrin, Epichlorhydrin-Äthylen-Oxid, Polyacrylamid oder Polyimid besteht.

5. Formkörper nach einem der Ansprüche 1 bis 4, gekennzeichnet, durch die Ausbildung als gegen Wassereinwirkung und Witterungseinflüsse beständige Folie.

6. Formkörper nach Anspruch 5, dadurch gekennzeichnet, daß die Folie aus einem kautschukartigen Mischpolymerisat aus Äthylen, wenigstens einem anderen Olefin der Formel $CH_2 = CHR$ bzw. $CH_2 = CH - R - CH = CH_2$, in der R einen Alkylrest mit 1 bis 12 Kohlenstoffatomen darstellt und gegebenenfalls einem Polyolen, insbesondere Äthylen-Propylen-Dien-Terpolymer und/oder Äthylen-Propylen-Copolymer besteht.

7. Verfahren zum Herstellen eines Formkörpers nach einem der Ansprüche 1 bis 5, wobei aus Kunststoff bzw. Naturkautschuk gegebenenfalls mit Füllstoffen und Zusatzstoffen, enthaltend zumindest eine mittels energiereicher Strahlen vernetzbare Komponente ein Formkörper, beispielsweise durch Walzen, Kalandrieren, Spritzgießen, Extrudieren, Pressen, Extrusionsblasen, Beschichten od.dgl. geformt wird, dadurch gekennzeichnet, daß der Formkörper mittels energiereicher Strahlen ausgehend von einem Teil seiner gesamten Oberfläche und nur über einen Teil seines Querschnittes mindestens partiell vernetzt wird.

0020958

8. Verfahren nach Anspruch 7, dadurch gekennzeichnet, daß der Formkörper auf einer Oberflächenseite einer energiereichen Strahlung in solchem Umfange ausgesetzt wird, daß die vernetzbaren Komponenten im Bereich bis zu einer gewünschten Eindringtiefe der Strahlen in den Formkörper, die jedoch geringer als die Dicke des Formkörpers gewählt ist, zumindest partiell vernetzen.

9. Verfahren nach Anspruch 7 oder 8, dadurch gekennzeichnet, daß durch Bestrahlen mit beschleunigten Elektronen vernetzt wird.

10. Verfahren nach einem der Ansprüche 7 bis 9, dadurch gekennzeichnet, daß die für eine gewünschte Eindringtiefe der Strahlen erforderliche Bestrahlungsdosis durch Verändern der Beschleunigungsspannung für die energiereichen Strahlen oder durch Verändern des Abstandes zwischen Strahlungsquelle und Oberfläche des Formkörpers oder mittels eines Vorabsorbers, z.B. einer dünnen Metallfolie oder durch Verändern des Einfallwinkels der Strahlen auf die Oberfläche des Formkörpers eingestellt wird.

OZ 79028 MG/Hs.

1/3

1 — Fig.1

2

A

1 — Fig.2

B

1A

1 — Fig.3

1B

2

1A

A — 1

1C   1B

Fig.4

0020958

2/3

Fig. 5

Fig. 6

Fig. 7

6

2

7

Fig. 8

8

1

6

2

1

α

8

Fig. 9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DD - A - 94 497 (S.SCHILLER et al.) <br> + Gesamt + <br><br> -- | 1-5, 7-10 |
| X | GB - A - 1 297 440 (FORD MOTOR COMPANY) <br> + Gesamt + <br><br> -- | 1,2,4 7,8 |
|  | US - A - 3 246 054 (J.R. GUENTHER et al.) <br> + Spalte 3, Zeilen 37-68; Patentanspruch 1 + <br><br> ---- | 1,2,5 7-10 |

**KLASSIFIKATION DER ANMELDUNG (Int.Cl. 3)**

C 08 J 7/10
C 08 L 23/16
C 08 L 9/00
CO8 L 23/34//
C 08 J 5/18
E 04 D 5/00

**RECHERCHIERTE SACHGEBIETE (Int. Cl. 3)**

C 08 J
C 08 L 23/00
C 08 L 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| WIEN | 27-08-1980 | KALTENEGGER |